# EUROPEAN PATENT APPLICATION

(11) **EP 4 852 274 A1**
(43) Date of publication of application: **09.12.2026**
(21) Application number: 26176983.0
(22) Date of filing: 06.05.2026
(51) Int. Cl.: H02J 7/35, H01M 10/44, H02J 3/32

(54) **POWER GENERATION SYSTEM TECHNICAL FIELD**

(30) Priority: 05.06.2025 JP 2025093931
(71) Applicant: Yanmar Holdings Co., Ltd., Osaka (JP)
(72) Inventor: TANAKA, Kenichi, Osaka (JP); ONO, Taisuke, Osaka (JP)
(74) Representative: Isarpatent

(57) **Abstract**

A power generation system capable of improving the ease of making a profit by power generation is provided. The power generation system includes: a renewable energy power generation device that generates electric power using renewable energy; a power storage device that stores the electric power generated by the renewable energy power generation device; and a charge/discharge control unit that controls charge and discharge of the power storage device.

## Description

### TECHNICAL FIELD

The present invention relates to a power generation system.

### BACKGROUND ART

Patent Document 1 discloses a solar power generation self-consumption system that includes a solar cell and a power storage device and is used to self-consume electric power generated by the solar cell.

### PRIOR ART DOCUMENT

### PATENT DOCUMENT

Patent Document 1: JP2022-167193 A

### SUMMARY OF INVENTION

### TECHNICAL PROBLEM

Incidentally, conventionally, in a power generation system including a renewable energy power generation device such as a solar cell, in order to satisfy the principle of balancing, power generation is performed in accordance with a power generation plan planned in advance, and the generated electric power is entirely transmitted. However, it is difficult to predict electric power to be generated (a power generation amount) of the renewable energy power generation device due to its characteristic, and electric power exceeding the electric power on the power generation plan is often generated. In this case, for example, the generated electric power is transmitted (sold) as it is even at a low power trading price (in a time period of the low power trading price), and hence it is difficult to make a profit by power generation.

The present invention has been made to solve the above-mentioned problem, and has an object to provide a power generation system capable of improving the ease of making a profit by power generation.

### SOLUTION TO PROBLEM

A power generation system according to one aspect of the present invention includes: a renewable energy power generation device that generates electric power using renewable energy; a power storage device that stores the electric power generated by the renewable energy power generation device; and a charge/discharge control unit that controls charge and discharge of the power storage device.

### ADVANTAGEOUS EFFECTS OF INVENTION

With the above-mentioned configuration, the ease of making a profit by power generation can be improved.

### BRIEF DESCRIPTION OF DRAWINGS

FIG. 1 is a block diagram schematically illustrating a schematic configuration of a power generation system according to an embodiment of the present invention;
FIG. 2 is a flow chart illustrating a flow of formulating a two-days-ahead plan of the above-mentioned power generation system;
FIG. 3 is an explanatory view illustrating formulation of a charge/discharge plan of a power storage device provided in the above-mentioned power generation system;
FIG. 4 is a flow chart illustrating a flow of formulating a same-day plan of the above-mentioned power generation system; and
FIG. 5 is a flow chart illustrating a flow of stopping charge and discharge due to an abnormality of the above-mentioned power storage device.

### DESCRIPTION OF EMBODIMENTS

An embodiment of the present invention will be described below with reference to the drawings.

### [1. Schematic configuration of power generation system]

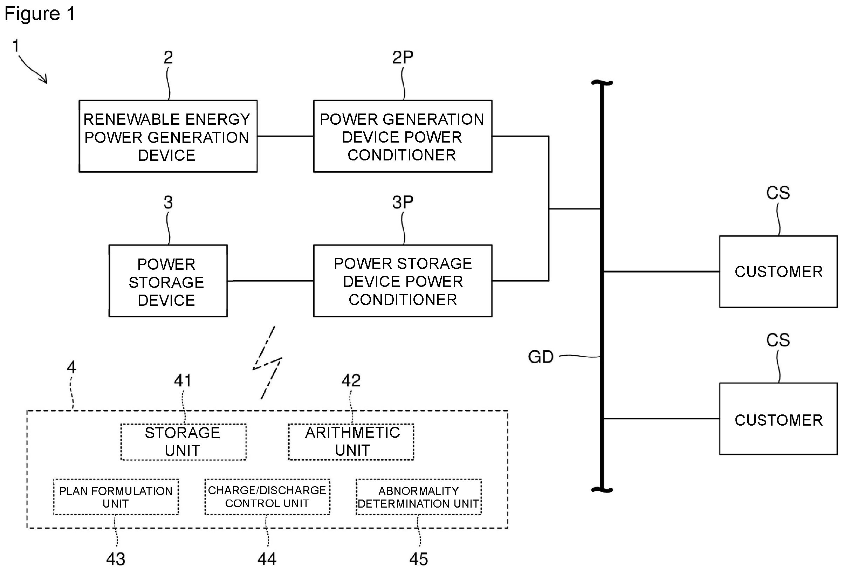

FIG. 1 is a block diagram schematically illustrating a schematic configuration of a power generation system 1 according to an embodiment of the present invention. The power generation system 1 is a system to be used by a power generation operator engaged in a power generation business of generating electric power to perform the power generation business. In more detail, the power generation operator manages and operates the power generation system 1. At least a part of the power generation system 1 is disposed in a site of a power plant (a power generation facility) owned by the power generation operator. As described above, the power generation system 1 is a power generation system to be used by the power generation operator.

The power generation system 1 includes a renewable energy power generation device 2, a power storage device 3, and a control unit 4. The renewable energy power generation device 2 is a solar power generation device including a solar panel that generates electric power using sunlight. However, this is exemplary, and the renewable energy power generation device 2 may be a wind power generation device that generates electric power using wind power or a hydraulic power generation device that generates electric power using hydraulic power.

The power storage device 3 is configured of a rechargeable storage battery. Examples of the power storage device 3 include a lithium-ion battery, a lead acid battery, and a sodium-sulfur battery. The lithium-ion battery includes an iron phosphate-based lithium-ion battery and a ternary lithium-ion battery. In the present embodiment, the power storage device 3 is configured of an iron phosphate-based lithium-ion battery. It is to be noted that the power storage device 3 may be configured of a unit of a plurality of cells, or may be configured of a single cell. In the present embodiment, the power storage device 3 is configured of a unit of a plurality of cells.

The renewable energy power generation device 2 and the power storage device 3 are respectively connected via a power generation device power conditioner 2P and a power storage device power conditioner 3P to a power system GD to be monitored and controlled by a power transmission and distribution operator. In detail, the renewable energy power generation device 2 and the power generation device power conditioner 2P are connected in series to configure one pair, and the power storage device 3 and the power storage device power conditioner 3P are also connected in series to configure one pair. Then, the pairs are connected in parallel to be connected to the power system GD.

To the power system GD, in addition to the renewable energy power generation device 2 and the power storage device 3, that is, the power generation system 1, a plurality of customers CS perform system connection. FIG. 1 illustrates two customers CS as an example, but the number of customers CS is not limited to two, and may be one or three or more. The power system GD transmits and distributes (supplies) AC power to each customer CS. Each customer CS consumes electric power supplied by a load (not shown) of each customer CS. It is to be noted that, in order for the customer CS to receive supply of electric power from the power system GD, that is, receive retail supply, predetermined procedures are required, such as concluding a contract regarding retail supply with an electricity retailer that performs a power retailing business.

The power generation device power conditioner 2P allows connection of the renewable energy power generation device 2 to the power system GD. For example, the power generation device power conditioner 2P converts DC power output from the above-mentioned solar panel into AC power.

The power storage device power conditioner 3P allows connection of the power storage device 3 to the power system GD. For example, the power storage device power conditioner 3P converts DC power output from the power storage device 3 into AC power, or converts AC power supplied to the power storage device 3 into DC power. The power storage device power conditioner 3P is configured of, for example, a bidirectional inverter.

For example, the DC power generated by the renewable energy power generation device 2 is converted by the power generation device power conditioner 2P into AC power to be supplied to the power system GD. The electric power supplied to the power system GD is supplied to the customer CS, or purchased by the power transmission and distribution operator while being supplied to the customer CS or without being supplied to the customer CS.
Further, in some cases, the DC power generated by the renewable energy power generation device 2 may be converted into AC power by the power generation device power conditioner 2P, and the converted AC power may be converted by the power storage device power conditioner 3P into DC power to be supplied to the power storage device 3. The DC power supplied to the power storage device 3 is stored in the power storage device 3. The DC power stored in the power storage device 3 is output at a predetermined timing to the power system GD via the power storage device power conditioner 3P.

The control unit 4 controls each unit of the power generation system 1, in particular, the power storage device 3. The control unit 4 is configured of a cloud server virtually present on the Internet. However, this is exemplary, and the control unit 4 may be configured of a server computer disposed in the vicinity of the power storage device 3 (or the renewable energy power generation device 2).

The control unit 4 is configured to include a storage unit 41 and an arithmetic unit 42. In the storage unit 41, a program, data, and the like are stored. The arithmetic unit 42 reads out a program from the storage unit 41 to execute arithmetic processing in accordance with this program. This allows the control unit 4 to operate as a plan formulation unit 43, a charge/discharge control unit 44, and an abnormality determination unit 45. That is, the power generation system 1 includes the plan formulation unit 43, the charge/discharge control unit 44, and the abnormality determination unit 45.

It is to be noted that the functional units 43 to 45 included in the power generation system 1 may be implemented by, as described above, causing the arithmetic unit 42 to execute the arithmetic processing according to the program, that is, by software, but may be implemented by other methods. At least one of the functional units 43 to 45 may be implemented by using an ASIC (Application Specific Integrated Circuit) or an FPGA (Field Programmable Gate Array), for example. That is, at least one of the functional units 43 to 45 may be implemented by hardware by using an exclusive IC or the like. Further, at least one of the functional units 43 to 45 may be implemented by using software and hardware in combination. Further, the functional units 43 to 45 are conceptual configurations. Thus, the function executed by one component may be dispersed into a plurality of components, or the functions of the plurality of components may be integrated into one component.

The plan formulation unit 43 formulates various plans based on various pieces of information. The various plans include a power transmission plan of the power generation system 1. The power transmission plan of the power generation system 1 is a plan of a power transmission amount (a planned power transmission amount) to the power system GD on the same day on which the power generation system 1 performs power generation and power transmission. It is to be noted that, in the present embodiment, the same day on which the power generation system 1 performs power generation and power transmission is also called a power transmission day.

The power transmission plan of the power generation system 1 is formulated a predetermined number of days before the power transmission day, and is submitted to the power transmission and distribution operator via the electricity retailer. Specifically, the power transmission plan of the power generation system 1 is formulated and submitted three days and two days before the power transmission day. In the following, the power transmission plan of the power generation system 1 formulated three days before the power transmission day is also called a three-days-ahead plan, and the power transmission plan of the power generation system 1 formulated two days before the power transmission day is also called a two-days-ahead plan. However, this is exemplary, and the formulation timing and the submission destination of the power transmission plan of the power generation system 1 may be changed as appropriate. Further, the plan formulation unit 43 formulates on the power transmission day the power transmission plan of the power generation system 1 based on various pieces of information on the power transmission day and the two-days-ahead plan. In the following, the power transmission plan of the power generation system 1 formulated on the power transmission day is also called a same-day plan.

The charge/discharge control unit 44 controls charge and discharge of the power storage device 3 based on a charge/discharge plan of the power storage device 3 included in the power transmission plan of the power generation system 1 formulated by the plan formulation unit 43. The abnormality determination unit 45 determines presence or absence of an abnormality of the power storage device 3 based on the state of the power storage device 3. It is to be noted that details of each of the formulation of the power transmission plan of the power generation system 1 by the plan formulation unit 43, the control of charge and discharge of the power storage device 3 by the charge/discharge control unit 44, and the determination on presence or absence of an abnormality of the power storage device 3 by the abnormality determination unit 45 are described later.

As described above, the power generation system 1 includes: the renewable energy power generation device 2 that generates electric power using renewable energy (sunlight in the present embodiment); the power storage device 3 that stores the electric power generated by the renewable energy power generation device 2; and the charge/discharge control unit 44 that controls charge and discharge of the power storage device 3. Further, the power storage device 3 is connected in parallel with the renewable energy power generation device 2.

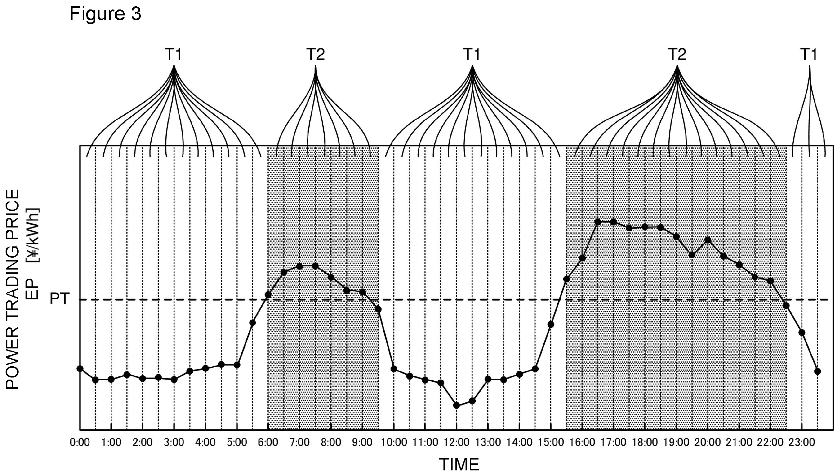

With the above-mentioned configuration, the power storage device 3 is included in the power generation system 1, and hence the electric power generated by the renewable energy power generation device 2 can be (temporarily) stored. This allows the electric power generated by the renewable energy power generation device 2 to be stored in the power storage device 3 without being transmitted (sold) in a time period in one day in which the generated electric power is traded (sold and purchased) at a relatively low price, that is, a time period unfavorable in terms of making a profit by power generation. Examples of the unfavorable time period described above include a first time period T1 (see FIG. 3) described later. In addition, the electric power stored in the power storage device 3 in the unfavorable time period described above can be transmitted (sold) in a time period in one day in which the generated electric power is traded (sold and purchased) at a relatively high price, that is, a time period favorable in terms of making a profit by power generation. Examples of the favorable time period described above include a second time period T2 (see FIG. 3) described later. Thus, one that uses the power generation system 1 (in the present embodiment, the power generation operator) can easily make a profit by power generation as compared with a case of using the power generation system 1 excluding the power storage device 3 (not including the power storage device 3). As described above, the ease of making a profit by power generation can be improved.

The effect of the present embodiment of improving the ease of making a profit by power generation is more suitable for one that operates a power generation business than for one that does not operate such a business. That is, for example, even when one that does not operate a power generation business uses the power generation system 1, the effect of the present embodiment is less enjoyed, but when one using the power generation system 1 is a power generation operator, the one operates a power generation business, and hence the effect of the present embodiment may be reliably enjoyed. From this viewpoint, as in the present embodiment, it is desirable that the power generation system 1 be used by a power generation operator.

Even in a case where the state of charge of the power storage device 3 is insufficient, or a case where the power storage device 3 has an abnormality, when the renewable energy power generation device 2 generates electric power to be supplied to the power system GD, it is desirable that the generated electric power be reliably supplied to the power system GD. From this viewpoint, as in the present embodiment, it is desirable that the power storage device 3 be connected in parallel with the renewable energy power generation device 2. It is to be noted that the state of charge of the power storage device 3 described above means a ratio of the remaining charge capacity to the charge capacity at full charging.

### [2. Formulation of two-days-ahead plan of power generation system]

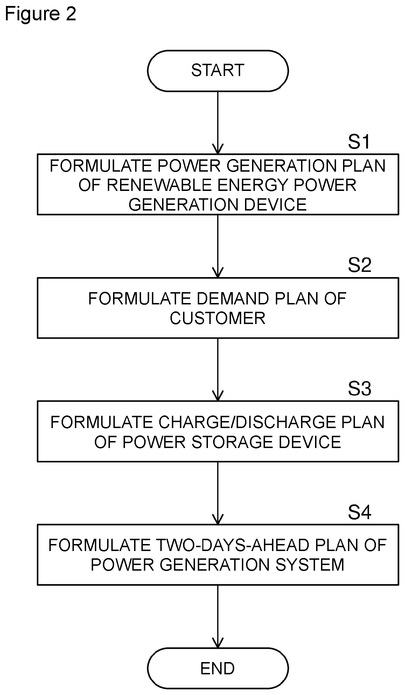

The flow of formulating the two-days-ahead plan of the power generation system 1 will be described with reference to FIG. 2. FIG. 2 is a flow chart illustrating a flow of formulating the two-days-ahead plan of the power generation system 1. It is to be noted that the flow of formulating the two-days-ahead plan and the flow of formulating the three-days-ahead plan are the same except that the day to which information used in each formulation belongs is different, and hence description of the flow of formulating the three-days-ahead plan is omitted.

The power transmission plan of the power generation system 1 is formulated as a planned power transmission amount of the power generation system 1 in each time period obtained by dividing the entire power transmission day (that is, 24 hours) equally into 48 periods. That is, for example, the power transmission plan of the power generation system 1 includes a planned power transmission amount in a time period from AM 0:00 to AM 0:30, a planned power transmission amount in a time period from AM 0:30 to AM 1:00, and the like. It is to be noted that various plans to be described later, for example, a power generation plan of the renewable energy power generation device 2, a demand plan of the customer CS, and a charge/discharge plan of the power storage device 3 are also formulated as plan values in each time period obtained by dividing the entire power transmission day equally into 48 periods. It is to be noted that the same time periods in the respective plans correspond to each other. For example, the time period from AM 0:00 to AM 0:30 of the power generation plan of the renewable energy power generation device 2, the time period from AM 0:00 to AM 0:30 of the demand plan of the customer CS, and the time period from AM 0:00 to AM 0:30 of the charge/discharge plan of the power storage device 3 correspond to each other.

In step S1, the plan formulation unit 43 (see FIG. 1) formulates the power generation plan (the power generation plan for two days ahead) of the renewable energy power generation device 2. In the present embodiment, the formulation is performed based on weather information and solar radiation information in an area in which the renewable energy power generation device 2 is located. The area in which the renewable energy power generation device 2 is located is specified based on position information (information of latitude and longitude) of the renewable energy power generation device 2. The above-mentioned weather information includes a cloud amount information in the area. The above-mentioned solar radiation information includes past solar radiation information stored in a predetermined database, and solar radiation information measured on the day of formulating the power generation plan of the renewable energy power generation device 2. It is to be noted that the power generation plan of the renewable energy power generation device 2 may be formulated based on, in place of or in addition to the above-mentioned information (weather information and the like), information other than the above-mentioned information. When the power generation plan of the renewable energy power generation device 2 is formulated, the process proceeds to next step S2.

In step S2, the plan formulation unit 43 formulates the demand plan (the demand plan for two days ahead) of the customer CS. In the present embodiment, the formulation is performed based on the weather information of the area in which each customer CS is located, and the past demand amount of each customer CS stored in another predetermined database. However, this is exemplary, and the formulation of the demand plan of the customer CS may be performed based on, in place of or in addition to those pieces of information, information other than those pieces of information. When the demand plan of the customer CS is formulated, the process proceeds to next step S3.

In step S3, the plan formulation unit 43 formulates the charge/discharge plan (the charge/discharge plan for two days ahead) of the power storage device 3. More details are as follows. FIG. 3 is an explanatory view illustrating formulation of the charge/discharge plan of the power storage device 3. In FIG. 3, an example of a power trading price EP of two days after the day of formulating the charge/discharge plan of the power storage device 3, that is, the power transmission day is indicated by the sold line (and each plot on the solid line), and a predetermined price threshold value PT is indicated by the broken line. The power trading price EP is, for example, an electricity rate in Japan Electric Power Exchange (JEPX). The price threshold value PT is set in accordance with a contract price for electric power presented when the power generation operator makes a contract with the customer CS. However, this is exemplary, and the price threshold value PT may be set as appropriate.

In the present embodiment, the charge/discharge plan of the power storage device 3 is formulated based on the power trading price EP of two days after the formulation day, the predetermined price threshold value PT, and a predicted state of charge of the power storage device 3 of two days after the formulation day. The predicted state of charge of the power storage device 3 is a predicted value of the state of charge of the power storage device 3 described above, and is an example of prediction information of a charge state of the power storage device 3. A charge/discharge voltage of the power storage device 3 is given as another example of the prediction information of the charge state of the power storage device 3.

Specifically, in the charge/discharge plan of the power storage device 3, each time period is set to the first time period T1 when the power trading price EP is lower than the price threshold value PT, and is set to the second time period T2 when the power trading price EP is equal to or higher than the price threshold value PT. In FIG. 3, a time period set to the first time period T1 is represented by white fill, and a time period set to the second time period T2 is represented by light black fill. For example, in the charge/discharge plan of the power storage device 3, the time period from AM 0:00 to AM 0:30, the time period from AM 10:00 to AM 10:30, and the like are set to the first time period T1, because the power trading price EP in these time periods falls below the price threshold value PT. Meanwhile, in the charge/discharge plan of the power storage device 3, the time period from AM 6:00 to AM 6:30, the time period from PM 3:30 to PM 4:00, and the like are set to the second time period T2, because the power trading price EP in these time periods exceeds the price threshold value PT.

As described above, the first time period T1 is a time period in which the power trading price EP is lower than the price threshold value PT, and the second time period T2 is a time period in which the power trading price EP is equal to or higher than the price threshold value PT. However, this is exemplary, and, in the charge/discharge plan of the power storage device 3, each time period may be set to the first time period T1 when the power trading price EP is equal to or lower than the price threshold value PT, and each time period may be set to the second time period T2 when the power trading price EP is higher than the price threshold value PT.

In each time period set to the first time period T1 (for example, a time period from AM 0:00 to AM 0:30), a charge amount (a planned charge amount) of the power storage device 3 is planned based on the predicted state of charge of the power storage device 3 described above in this time period. That is, in each time period set to the first time period T1, the power storage device 3 is charged. In each time period set to the second time period T2 (for example, a time period from AM 10:00 to AM 10:30), a discharge amount (a planned discharge amount) of the power storage device 3 is planned based on the predicted state of charge of the power storage device 3 described above in this time period. That is, in each time period set to the second time period T2, the power storage device 3 is discharged.

It is to be noted that the charge/discharge plan of the power storage device 3 may be formulated based on any one of the information of the charge state of the power storage device 3 (in the present embodiment, the predicted state of charge of the power storage device 3), the power trading price EP, and the weather information of the area in which the renewable energy power generation device 2 is located.

As illustrated in FIG. 2 (referring back to FIG. 2), when the charge/discharge plan of the power storage device 3 is formulated, the process proceeds to next step S4.

In step S4, the plan formulation unit 43 formulates the two-days-ahead plan of the power generation system 1. In the present embodiment, the two-days-ahead plan of the power generation system 1 is formulated depending on whether each time period is the first time period T1 or the second time period T2 in the charge/discharge plan of the power storage device 3.

In the two-days-ahead plan of the power generation system 1, in the time period set to the first time period T1 in the charge/discharge plan of the power storage device 3, a value obtained by subtracting a planned charge amount of the power storage device 3 in the time period from a planned power generation amount of the renewable energy power generation device 2 in the time period is set as the power transmission amount. However, when this power transmission amount exceeds the demand amount of the customer CS in the time period, this demand amount of the customer CS is set as the power transmission amount.

In the two-days-ahead plan of the power generation system 1, in the time period set to the second time period T2 in the charge/discharge plan of the power storage device 3, a larger one of the planned power generation amount of the renewable energy power generation device 2 in the time period and a planned discharge amount of the power storage device 3 in the time period is set as the power transmission amount. It is to be noted that, when the planned power generation amount of the renewable energy power generation device 2 in the time period and the planned discharge amount of the power storage device 3 in the time period are the same, any of those is set as the power transmission amount. Further, in the time period set to the second time period T2, even when the set power transmission amount exceeds the demand amount of the customer CS in the time period, the setting is maintained.

It is to be noted that the formulation (method) of the two-days-ahead plan of the power generation system 1 described above is exemplary, and the formulation (method) of the two-days-ahead plan of the power generation system 1 may be changed as appropriate. The formulated two-days-ahead plan of the power generation system 1 is provided to the power transmission and distribution operator via the electricity retailer as described above.

### [3. Formulation of same-day plan of power generation system]

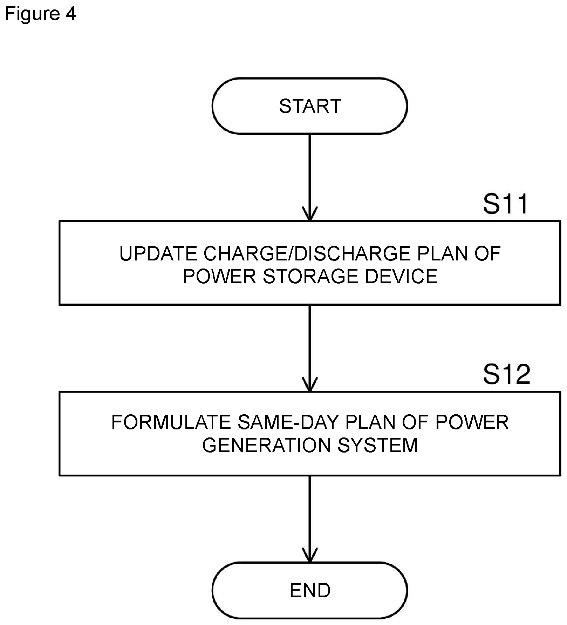

The flow of formulating the same-day plan of the power generation system 1 will be described with reference to FIG. 4. FIG. 4 is a flow chart illustrating a flow of formulating the same-day plan of the power generation system 1. As described above, the same-day plan of the power generation system 1 is formulated on the power transmission day (the same day on which the power generation system 1 performs power generation and power transmission).

In step S11, the plan formulation unit 43 updates the charge/discharge plan (see step S3 of FIG. 2) of the power storage device 3 formulated two days before the power transmission day. In the present embodiment, the update is performed based on the power trading price EP on the power transmission day, the predetermined price threshold value PT, and the state of charge of the power storage device 3 on the power transmission day. Specifically, in the charge/discharge plan of the power storage device 3, each time period is set to the first time period T1 (see FIG. 3) when the power trading price EP on the power transmission day is lower than the price threshold value PT. Further, in the charge/discharge plan of the power storage device 3, each time period is set to the second time period T2 (see FIG. 3) when the power trading price EP on the power transmission day is equal to or higher than the price threshold value PT. As described above, the price threshold value PT is set in accordance with the contract price of the electric power presented when the power generation operator makes a contract with the customer CS, and hence is the same between two days before the power transmission day and the power transmission day (the same day). Meanwhile, the power trading price EP on the power transmission day varies from day to day, and hence differs between two days before the power transmission day and the power transmission day (the same day). Thus, one time period of the charge/discharge plan of the power storage device 3 may be set to the first time period T1 two days before the power transmission day, but may be set (changed) to the second time period T2 on the power transmission day (the same day).

In each time period set to the first time period T1, a planned charge amount of the power storage device 3 is planned based on the state of charge of the power storage device 3 in the time period. In each time period set to the second time period T2, a planned discharge amount of the power storage device 3 is planned based on the state of charge of the power storage device 3 in the time period. It is to be noted that the state of charge of the power storage device 3 on the power transmission day corresponds to an actual value of the power generation amount generated by the power generation system 1 until the power transmission day.

It is to be noted that the charge/discharge plan of the power storage device 3 may be updated based on any one of the information of the charge state of the power storage device 3 (in the present embodiment, the state of charge of the power storage device 3) on the power transmission day and the power trading price on the power transmission day.

In step S12, the plan formulation unit 43 formulates the same-day plan of the power generation system 1 based on the charge/discharge plan of the power storage device 3 updated in step S11. In the present embodiment, the same-day plan of the power generation system 1 is formulated depending on whether each time period is the first time period T1 or the second time period T2 in the updated charge/discharge plan of the power storage device 3.

In the same-day plan of the power generation system 1, in the time period set to the first time period T1 in the updated charge/discharge plan of the power storage device 3, a value obtained by subtracting a planned charge amount of the power storage device 3 in the time period from a planned power generation amount of the renewable energy power generation device 2 in the time period is set as the power transmission amount. However, when this power transmission amount exceeds the demand amount of the customer CS in the time period, this demand amount of the customer CS is set as the power transmission amount.

In the same-day plan of the power generation system 1, in the time period set to the second time period T2 in the updated charge/discharge plan of the power storage device 3, a larger one of the planned power generation amount of the renewable energy power generation device 2 in the time period and a planned discharge amount of the power storage device 3 in the time period is set as the power transmission amount. It is to be noted that, when the planned power generation amount of the renewable energy power generation device 2 in the time period and the planned discharge amount of the power storage device 3 in the time period are the same, any of those is set as the power transmission amount. Further, in the time period set to the second time period T2, even when the set power transmission amount exceeds the demand amount of the customer CS in the time period, the setting is maintained.

It is to be noted that the formulation (method) of the same-day plan of the power generation system 1 described above is exemplary, and the formulation (method) of the same-day plan of the power generation system 1 may be changed as appropriate.

The formulated same-day plan of the power generation system 1 is used for power generation and power transmission of the power generation system 1. In other words, the power generation system 1 performs power generation and power transmission in accordance with the same-day plan of the power generation system 1. For example, the power storage device 3 controls charge and discharge thereof based on the charge/discharge plan of the power storage device 3 updated on the power transmission day, which is included in the same-day plan of the power generation system 1. In detail, the charge/discharge control unit 44 (see FIG. 1) controls charge and discharge of the power storage device 3 depending on whether each time period of the updated charge/discharge plan of the power storage device 3 is the first time period T1 or the second time period T2. In the present embodiment, the charge/discharge control unit 44 causes the power storage device 3 to be charged in the time period set to the first time period T1 in the updated charge/discharge plan of the power storage device 3, and causes the power storage device 3 to be discharged in the time period set to the second time period T2 in the updated charge/discharge plan of the power storage device 3.

It is to be noted that the power transmission plan of the power generation system 1 (the same-day plan of the power generation system 1) formulated on the power transmission day is not submitted to the power transmission and distribution operator unlike the power transmission plan of the power generation system 1 (for example, the two-days-ahead plan of the power generation system 1) formulated a predetermined number of days before the power transmission day.

As described above, the plan formulation unit 43 formulates the charge/discharge plan of the power storage device 3 a predetermined number of days before the same day on which power generation is performed, based on at least one of the information of the charge state of the power storage device 3, the power trading price EP, and the weather information of the area in which the renewable energy power generation device 2 is located. Further, the plan formulation unit 43 updates, on the same day on which power generation is performed, the charge/discharge plan of the power storage device 3 formulated a predetermined number of days before the same day, based on at least one of the information of the charge state of the power storage device 3 on the same day and the power trading price EP on the same day. Moreover, the charge/discharge control unit 44 causes the power storage device 3 to be charged in the first time period T1 in which the power trading price EP is lower than the predetermined price threshold value PT, and causes the power storage device 3 to be discharged in the second time period T2 in which the power trading price EP is equal to or higher than the predetermined price threshold value PT.

The following configuration is desirable when the power generation system 1 has a configuration including the charge/discharge control unit 44 that controls charge and discharge of the power storage device 3, from the viewpoint of charging the power storage device 3 in the above-mentioned unfavorable time period and discharging the power storage device 3 in the above-mentioned favorable time period in order for the power generation operator to achieve the ease of making a profit by power generation. That is, as in the present embodiment, the charge/discharge control unit 44 desirably causes the power storage device 3 to be charged in the first time period T1 in which the power trading price EP is lower than the predetermined price threshold value PT, and causes the power storage device 3 to be discharged in the second time period T2 in which the power trading price EP is equal to or higher than the price threshold value PT.

In the viewpoint of controlling charge and discharge of the power storage device 3 in a manner corresponding to the power transmission plan of the power generation system 1, as illustrated in FIG. 2, the power generation system 1 desirably includes the plan formulation unit 43 that formulates the charge/discharge plan of the power storage device 3.

In the viewpoint of facilitating the formulation of the charge/discharge plan of the power storage device 3, the following configuration is desirable. That is, as illustrated in FIG. 2, the plan formulation unit 43 desirably formulates the charge/discharge plan of the power storage device 3 based on at least one of the information of the charge state of the power storage device 3, the power trading price EP, and the weather information of the area in which the renewable energy power generation device 2 is located.

In the viewpoint of reliably allowing the power generation operator to achieve the ease of making a profit by power generation, that is, improving the ease of making a profit by power generation of the power generation operator, the following configuration is desirable. That is, as illustrated in FIG. 4, the plan formulation unit 43 desirably updates, on the same day of power generation, the charge/discharge plan of the power storage device 3 formulated a predetermined number of days before the same day, based on at least one of the information of the charge state of the power storage device 3 on the same day and the power trading price EP on the same day.

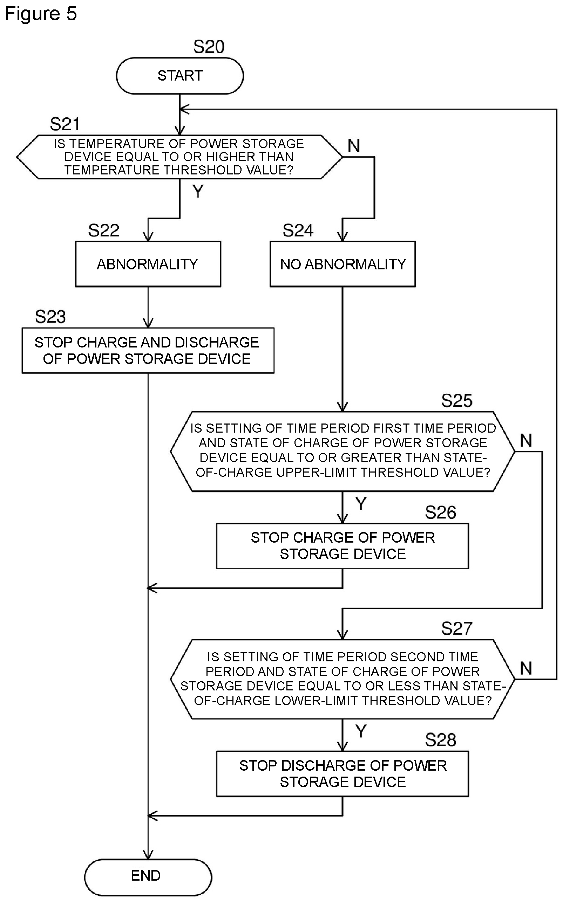

When charge and discharge of the power storage device 3 is controlled based on the charge/discharge plan of the power storage device 3 updated on the power transmission day, in a case where an abnormality occurs in the power storage device 3, charge and discharge of the power storage device 3 is stopped. More details are as follows. FIG. 5 is a flow chart illustrating a flow of stopping charge and discharge due to an abnormality of the power storage device 3. In step S20, it is assumed that charge and discharge of the power storage device 3 is controlled by the charge/discharge control unit 44 based on the updated charge/discharge plan of the power storage device 3.

In step S21, the abnormality determination unit 45 (see FIG. 1) determines whether or not the temperature of the power storage device 3 is equal to or higher than a predetermined temperature threshold value. In the present embodiment, the temperature of the power storage device 3 is an internal temperature of the power storage device 3 detected by an internal temperature sensor (not shown) built into the power storage device 3. However, this is exemplary, and the temperature of the power storage device 3 may be a surface temperature of the power storage device 3 detected by a surface temperature sensor (not shown) attached to the surface of the power storage device 3. The above-mentioned predetermined temperature threshold value is set in advance in accordance with the characteristic in temperature of the power storage device 3, and is stored in the storage unit 41 (see FIG. 1). That is, for example, the temperature threshold value in a case where the temperature of the power storage device 3 is the internal temperature of the power storage device 3 and the temperature threshold value in a case where the temperature of the power storage device 3 is the surface temperature of the power storage device 3 may differ from each other.

When the temperature of the power storage device 3 is equal to or higher than the predetermined temperature threshold value (Yes in step S21), the abnormality determination unit 45 determines that the power storage device 3 has an abnormality (step S22). That is, the abnormality determination unit 45 determines that the power storage device 3 has an abnormality when the temperature of the power storage device 3 is equal to or higher than the predetermined temperature threshold value. When it is determined that the power storage device 3 has an abnormality, the charge/discharge control unit 44 stops charge and discharge of the power storage device 3 (step S23). That is, the charge/discharge control unit 44 stops charge and discharge of the power storage device 3 when the abnormality determination unit 45 determines that the power storage device 3 has an abnormality.

In a configuration in which the power generation system 1 includes the abnormality determination unit 45 that determines whether or not the power storage device 3 has an abnormality, from the viewpoint of avoiding, when the power storage device 3 has an abnormality, worsening of the abnormality or inducing an abnormality of each unit of the power generation system 1 other than the power storage device 3, the following configuration is desirable. That is, as in the present embodiment, the charge/discharge control unit 44 desirably stops charge and discharge of the power storage device 3 when the abnormality determination unit 45 determines that the power storage device 3 has an abnormality.

When the power storage device 3 has an abnormality, the power storage device 3 often has a high temperature (is overheated). For example, even when the power storage device 3 is not heated, when a short-circuit is caused in an electrical component (not shown) built in the power storage device 3 as an electrical abnormality of the power storage device 3, the power storage device 3 is brought to a high temperature. Further, when an abnormality is caused in a cooling mechanism (not shown) built in the power storage device 3, the power storage device 3 is less cooled or not cooled, and thus the power storage device 3 is brought to a high temperature. Thus, when it is determined that the power storage device 3 has an abnormality in a case where the power storage device 3 has a high temperature, the abnormality of the power storage device 3 is efficiently detected. As described above, from the viewpoint of efficiently detecting the abnormality of the power storage device 3, as in the present embodiment, in the configuration in which the power generation system 1 includes the abnormality determination unit 45, the abnormality determination unit 45 desirably determines that the power storage device 3 has an abnormality when the temperature of the power storage device 3 is equal to or higher than a predetermined temperature threshold value.

When the temperature of the power storage device 3 is not equal to or higher than the predetermined temperature threshold value (No in step S21), the abnormality determination unit 45 determines that the power storage device 3 has no abnormality (step S24). When it is determined that the power storage device 3 has no abnormality, the process proceeds to next step S25.

In step S25, the charge/discharge control unit 44 determines whether or not the setting of the time period at this time point is the first time period T1 (see FIG. 3), and the state of charge of the power storage device 3 at this time point is equal to or greater than a predetermined state-of-charge upper-limit threshold value. The predetermined state-of-charge upper-limit threshold value is set in advance, and is stored in the storage unit 41. In the present embodiment, the state-of-charge upper-limit threshold value is set to 100%. However, this is exemplary, and the state-of-charge upper-limit threshold value may be set to, for example, 95%. When the above-mentioned condition is satisfied (Yes in step S25), the charge/discharge control unit 44 stops charge of the power storage device 3 (step S26). When the above-mentioned condition is not satisfied (No in step S25), the process proceeds to step S27.

In step S27, the charge/discharge control unit 44 determines whether or not the setting of the time period at this time point is the second time period T2 (see FIG. 3), and the state of charge of the power storage device 3 at this time point is equal to or less than a predetermined state-of-charge lower-limit threshold value. The predetermined state-of-charge lower-limit threshold value is set in advance, and is stored in the storage unit 41. In the present embodiment, the state-of-charge lower-limit threshold value is set to 0%. However, this is exemplary, and the state-of-charge lower-limit threshold value may be set to, for example, 5%. When the above-mentioned condition is satisfied (Yes in step S27), the charge/discharge control unit 44 stops discharge of the power storage device 3 (step S28). When the above-mentioned condition is not satisfied (No in step S27), the process is returned to step S21, that is, charge and discharge of the power storage device 3 is continued.

As described above, even when the power storage device 3 has no abnormality, discharge or charge of the power storage device 3 is sometimes stopped. In this manner, over-discharge and over-charge of the power storage device 3 are prevented, and progress of deterioration of the power storage device 3 is suppressed.

### [4. Control of power storage device at occurrence of imbalance]

The power generation system 1 performs power generation and power transmission in accordance with the same-day plan thereof. As described above, the same-day plan of the power generation system 1 is formulated based on the charge/discharge plan (the charge/discharge plan of the power transmission day) of the power storage device 3 obtained by updating the charge/discharge plan (the charge/discharge plan for two days ahead) of the power storage device 3 included in the two-days-ahead plan of the power generation system 1. Thus, the same-day plan and the two-days-ahead plan of the power generation system 1 are different in some cases. In this case, even when the power generation and the power transmission of the power generation system 1 are performed as in the same-day plan, the (actual) power transmission amount in at least one time period becomes inconsistent with the planned power transmission amount in the corresponding time period in the two-days-ahead plan. As described above, a state in which the actual power transmission amount of the power generation system 1 is deviated from the planned power transmission amount on the two-days-ahead plan of the power generation system 1 (or the three-days-ahead plan of the power generation system 1) is called imbalance.

The imbalance includes a positive imbalance in which the actual power transmission amount of the power generation system 1 exceeds the planned power transmission amount on the two-days-ahead plan of the power generation system 1, and a negative imbalance in which the actual power transmission amount of the power generation system 1 falls below the planned power transmission amount on the two-days-ahead plan of the power generation system 1. For example, in a case where the planned power generation amount on the same-day plan of the power generation system 1 is larger than the planned power generation amount on the two-days-ahead plan, when power generation and power transmission of the power generation system 1 are performed as the same-day plan, the positive imbalance is caused. Meanwhile, in a case where the planned power generation amount on the same-day plan of the power generation system 1 is smaller than the planned power generation amount on the two-days-ahead plan, when power generation and power transmission of the power generation system 1 are performed as in the same-day plan, the negative imbalance is caused. Further, when the renewable energy power generation device 2 generates electric power that exceeds the planned power generation amount on the power generation plan thereof, the positive imbalance may be caused, and when the renewable energy power generation device 2 generates electric power that is lower than the planned power generation amount on the power generation plan thereof, the negative imbalance may be caused. It is to be noted that, when the imbalance is caused due to the operation related to transmission and distribution of electric power based on the principle of balancing, the power generation operator is required to pay imbalance charges to the power transmission and distribution operator in accordance with an amount of imbalance caused.

In the present embodiment, in the first time period T1, the power storage device 3 is controlled such that the occurrence of the positive imbalance is avoided and the occurrence of the negative imbalance is permitted. For example, even when the renewable energy power generation device 2 generates electric power that exceeds the planned power generation amount on the power generation plan thereof, the generated electric power corresponding to an amount exceeding the planned power generation amount is supplied and stored to the power storage device 3 without being transmitted (sold). That is, the power storage device 3 is charged in excess of the planned charge amount on the charge/discharge plan thereof. Meanwhile, in a case where the renewable energy power generation device 2 generates electric power that is lower than the planned power generation amount on the power generation plan thereof, even when dischargeable electric power is stored in the power storage device 3, the charge/discharge control unit 44 does not allow discharge of the power storage device 3 to start.

Further, in the second time period T2, the power storage device 3 is controlled such that the occurrence of the positive imbalance is permitted and the occurrence of the negative imbalance is avoided. For example, in a case where the renewable energy power generation device 2 generates electric power that exceeds the planned power generation amount on the power generation plan thereof, even when the power storage device 3 is capable of being charged (a chargeable capacity is ensured in the power storage device 3), the generated electric power corresponding to an amount exceeding the planned power generation amount is transmitted (sold). Meanwhile, when the renewable energy power generation device 2 generates electric power that is lower than the planned power generation amount on the power generation plan thereof, the power storage device 3 outputs electric power to supply electric power corresponding to an amount falling below the planned power generation amount. That is, the power storage device 3 is discharged in excess of the planned discharge amount on the charge/discharge plan thereof. In particular, discharge of the power storage device 3 is continued until, in the second time period T2, the state of charge of the power storage device 3 reaches the above-mentioned predetermined state-of-charge lower-limit threshold value.

With such control of charge and discharge of the power storage device 3, payment of an imbalance charge corresponding to the amount of caused imbalance is required, but a profit from power generation more than the payment of the imbalance charge can be obtained. As a result, the power generation operator can make a profit by power generation easier.

### [5. Clauses]

The power generation system 1 described in the present embodiment can also be expressed as a power generation system described in the following clauses.

A power generation system of clause (1) includes:
a renewable energy power generation device that generates electric power using renewable energy;
a power storage device that stores the electric power generated by the renewable energy power generation device; and
a charge/discharge control unit that controls charge and discharge of the power storage device.

A power generation system of clause (2) is the power generation system according to clause (1) in which the power generation system is used by a power generation operator.

A power generation system of clause (3) is the power generation system according to clause (1) or (2), in which
the power storage device is connected in parallel with the renewable energy power generation device.

A power generation system of clause (4) is the power generation system according to any one of clauses (1) to (3), in which
the charge/discharge control unit is configured to:
cause the power storage device to be charged in a first time period in which a power trading price is lower than a predetermined price threshold value; and
cause the power storage device to be discharged in a second time period in which the power trading price is equal to or higher than the predetermined price threshold value.

A power generation system of clause (5) is the power generation system according to clause (4), further including
a plan formulation unit that formulates a charge/discharge plan of the power storage device.

A power generation system of clause (6) is the power generation system according to clause (5), in which
the plan formulation unit formulates the charge/discharge plan based on at least one of information of a charge state of the power storage device, the power trading price, and weather information of an area in which the renewable energy power generation device is located.

A power generation system of clause (7) is the power generation system according to clause (6), in which
the plan formulation unit updates, on the same day on which power generation is performed, the charge/discharge plan formulated a predetermined number of days before the same day, based on at least one of the information of the charge state of the power storage device on the same day and the power trading price on the same day.

A power generation system of clause (8) is the power generation system according to any one of clauses (1) to (7), further including
an abnormality determination unit that determines whether or not the power storage device has an abnormality,
in which the charge/discharge control unit stops charge and discharge of the power storage device when the abnormality determination unit determines that the power storage device has an abnormality.

A power generation system of clause (9) is the power generation system according to clause (8), in which
the abnormality determination unit determines that the power storage device has an abnormality when a temperature of the power storage device is equal to or higher than a predetermined temperature threshold value.

The embodiment of the present invention has been described above, but the scope of the present invention is not limited thereto, and expansion and changes can be made without departing from the gist of the invention.

### INDUSTRIAL APPLICABILITY

The present invention is applicable to, for example, a power generation system for a power generation business.

### REFERENCE SIGNS LIST

- 1: power generation system
- 2: renewable energy power generation device
- 3: power storage device
- 43: plan formulation unit
- 44: charge/discharge control unit
- 45: abnormality determination unit
- EP: power trading price
- PT: price threshold value
- T1: first time period
- T2: second time period

## Claims

1. A power generation system comprising:
a renewable energy power generation device that generates electric power using renewable energy;
a power storage device that stores the electric power generated by the renewable energy power generation device; and
a charge/discharge control unit that controls charge and discharge of the power storage device.

2. The power generation system according to claim 1, wherein the power generation system is used by a power generation operator.

3. The power generation system according to claim 1, wherein the power storage device is connected in parallel with the renewable energy power generation device.

4. The power generation system according to claim 1, wherein
the charge/discharge control unit is configured to:
cause the power storage device to be charged in a first time period in which a power trading price is lower than a predetermined price threshold value; and
cause the power storage device to be discharged in a second time period in which the power trading price is equal to or higher than the predetermined price threshold value.

5. The power generation system according to claim 4, further comprising a plan formulation unit that formulates a charge/discharge plan of the power storage device.

6. The power generation system according to claim 5, wherein the plan formulation unit formulates the charge/discharge plan based on at least one of information of a charge state of the power storage device, the power trading price, and weather information of an area in which the renewable energy power generation device is located.

7. The power generation system according to claim 6, wherein the plan formulation unit updates, on the same day on which power generation is performed, the charge/discharge plan formulated a predetermined number of days before the same day, based on at least one of the information of the charge state of the power storage device on the same day and the power trading price on the same day.

8. The power generation system according to any one of claims 1 to 7, further comprising an abnormality determination unit that determines whether or not the power storage device has an abnormality,
wherein the charge/discharge control unit stops charge and discharge of the power storage device when the abnormality determination unit determines that the power storage device has an abnormality.

9. The power generation system according to claim 8, wherein the abnormality determination unit determines that the power storage device has an abnormality when a temperature of the power storage device is equal to or higher than a predetermined temperature threshold value.
